# FASCICULE DE BREVET EUROPEEN

(11) **EP 1 514 717 B1**
(45) Date de publication et mention de la délivrance du brevet: **19.11.2008**
(21) Numéro de dépôt: 04292159.3
(22) Date de dépôt: 08.09.2004
(51) Int. Cl.: B60K 11/04

(54) **Déflecteur pour avant de véhicule automobile, moyen de maintien de ce déflecteur et bloc-avant de véhicule automobile**
Kraftfahrzeugfrontspoiler, Spoilerbefestigungsmittel und Kraftfahrzeugfrontteil
Front end spoiler for motor vehicle, spoiler holding means and front part for motor vehicle

(30) Priorité: 11.09.2003 FR 0310697
(43) Date de publication de la demande: 16.03.2005
(73) Titulaire: COMPAGNIE PLASTIC OMNIUM, 69007 Lyon (FR)
(72) Inventeur: Bourennane, Faicel, 01500 Amberieu en Bugey (FR)
(74) Mandataire: Remy, Vincent Noel Paul

(56) Documents cités:
- DE-A- 3 916 692
- FR-A- 2 460 219
- FR-A- 2 485 996
- GB-A- 2 343 740
- US-A- 4 776 627

## Description

La présente invention concerne un déflecteur pour avant de véhicule automobile, un moyen de maintien de ce déflecteur et un bloc-avant de véhicule automobile.

On connaît déjà, dans l'état de la technique, des déflecteurs latéraux pour radiateur de véhicule automobile. Ces déflecteurs latéraux, agencés entre une grille d'entrée d'air du bouclier avant et un radiateur fixé sur la face avant technique, ont pour fonction de guider l'air entrant par la grille, vers le radiateur. Ces déflecteurs sont légers et peu volumineux, dans un matériau assez rigide pour guider l'air tout en étant relativement souple.

Généralement, en raison du risque de pliage dû à la souplesse de ce matériau, on ne réalise pas chaque déflecteur latéral d'un seul tenant mais on le divise en deux parties plus petites, l'une, située en amont, venue de matière avec le convergent inférieur, pour guider l'air dès sa sortie de la grille, et l'autre, située en aval, solidaire du radiateur, pour guider l'air jusqu'aux ailettes du radiateur. Ces deux parties sont agencées dans la continuité l'une de l'autre et sont chacune de dimensions suffisamment réduites pour éviter leur pliage.

On sait également qu'en raison des nouvelles normes destinées à minimiser les dommages causés par un choc avec un piéton, les véhicules automobiles peuvent devoir comporter une poutre basse, fixée en-dessous du pare-chocs, afin de préserver le genou du piéton en cas de choc.

Le problème de la présence de cette poutre au niveau de la partie basse du bouclier, juste au-dessus du convergent inférieur, consiste en ce qu'elle empêche la présence à cet endroit de la partie amont du déflecteur latéral traditionnellement solidaire du convergent.

Une solution pourrait consister à conformer la partie amont du déflecteur latéral de manière à lui faire contourner la poutre basse. Mais une telle solution ne conviendrait pas du fait que le morceau du déflecteur amont qui se trouve au-dessus de la poutre basse serait laissé libre et donc serait susceptible de plier et de guider l'air dans une mauvaise direction.

L'invention vise à remédier au problème ci-dessus en fournissant un bloc avant comportant une poutre basse et un déflecteur radiateur latéral, ce déflecteur guidant l'air dès la sortie de la grille d'entrée d'air sans risquer de plier lors de son utilisation.

A cet effet, l'invention a pour objet un déflecteur pour avant de véhicule automobile, du type comportant un voile destiné à être solidarisé à un radiateur, ce voile comportant une extrémité libre distante du radiateur, caractérisé en ce qu'il comporte un moyen de maintien de l'extrémité libre du voile, destiné à être solidarisé à une pièce de carrosserie de l'avant du véhicule automobile.

Ainsi, grâce au moyen de maintien du voile, l'extrémité libre du voile ne risque pas de plier et peut guider l'air, sans perte du flux, dans la bonne direction.

Plus précisément, le moyen de maintien est un moyen de recentrage du voile, il comporte deux parois délimitant un logement pour l'extrémité libre du voile.

Cette caractéristique est avantageuse car les dimensions du voile, qui est réalisé d'un seul tenant, lui confèrent une grande souplesse qui risque de lui donner une conformation inappropriée. En le recentrant, on s'assure que le voile, une fois maintenu par le moyen de maintien, a retrouvé la forme souhaitée pour son efficacité.

De préférence, le logement comporte une embouchure élargie facilitant l'introduction de l'extrémité libre. Un avantage de cette embouchure élargie est de permettre un positionnement facile de l'extrémité libre du voile du déflecteur entre les deux parois lors de l'assemblage du bouclier avant sur la face avant technique du véhicule.

Selon une autre caractéristique de ce déflecteur, il subsiste un jeu prédéterminé entre l'extrémité libre du voile et les deux parois lorsque l'extrémité libre est maintenue par le moyen de maintien.

Ainsi, grâce à ce jeu, le voile du déflecteur est libre entre deux positions prédéterminées, ce qui laisse suffisamment de marge à la position du voile pour pallier les dispersions des dimensions des divers composants, les dilatations thermiques, et ce qui permet d'utiliser un déflecteur standard sur des véhicules différents.

En particulier, le jeu évite que le voile ne se coince au fond du logement si, sur un véhicule donné, le radiateur est rapproché du bouclier au point de mettre le bord libre du voile en butée contre la paroi de fond du logement. En d'autres termes, on tolère ainsi des variations de longueur du véhicule.

Suivant d'autres caractéristique de l'invention :
- le voile comporte une extrémité fixée au radiateur, opposée à l'extrémité libre ;
- le véhicule automobile comporte une poutre basse ; et
- le voile est réalisé en matière plastique, notamment en polypropylène chargé.

L'invention a également pour objet un moyen de maintien d'un déflecteur du type précité, caractérisé en ce qu'il comprend une partie formant un support de feux anti-brouillard, un obturateur d'emplacement de feux anti-brouillard ou une grille d'entrée d'air. Ce moyen de maintien est destiné à être rapporté sur une peau de pare-chocs du véhicule automobile

Ainsi, le moyen de maintien n'est pas directement issu de moulage avec la peau de pare-choc, ce qui évite les risques de retassures, peu esthétiques, sur la surface extérieure du pare-chocs.

Enfin, l'invention a pour objet un bloc-avant de véhicule automobile, comportant un déflecteur du type précité.

L'invention sera mieux comprise à la lecture de la description qui va suivre, donnée uniquement à titre d'exemple et faite en se référant aux dessins dans lesquels :

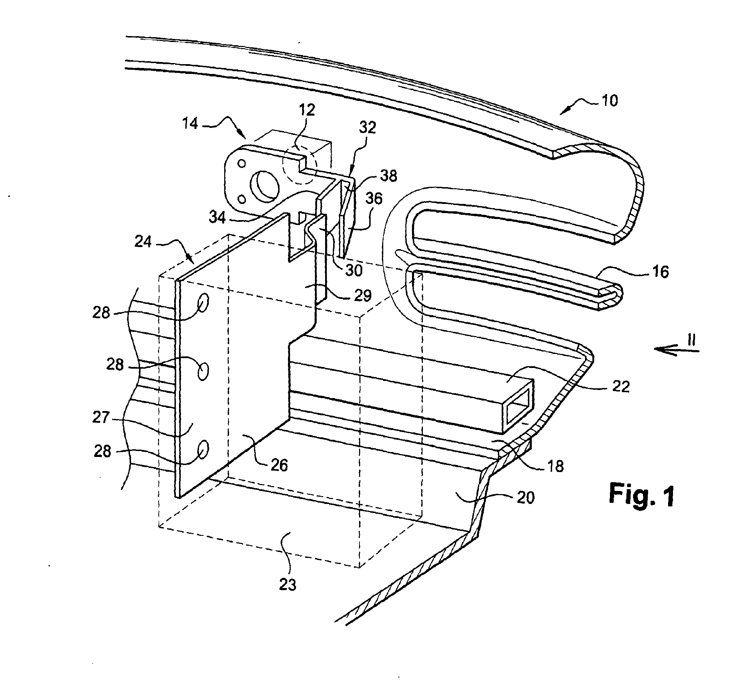

- la figure 1 est une vue en perspective éclatée de l'intérieur d'un bouclier avant d'un véhicule comportant un déflecteur selon l'invention, et
- la figure 2 est une coupe de l'avant du véhicule de la figure 1 projeté selon la direction II.

On a représenté sur les figures un bouclier avant 10 d'un véhicule automobile. Ce bouclier 10 comporte un orifice 12, destiné à recevoir un support 14 pour feux anti-brouillard, et une grille 16 d'entrée d'air. Le support 14 pour feux anti-brouillard est fixé au bouclier 10 de façon classique.

Sur le bord inférieur 18 du bouclier 10, on a rapporté un convergent inférieur 20 destiné à éviter que l'air qui passe, lorsque le véhicule roule, sous le bouclier, ne tourbillonne.

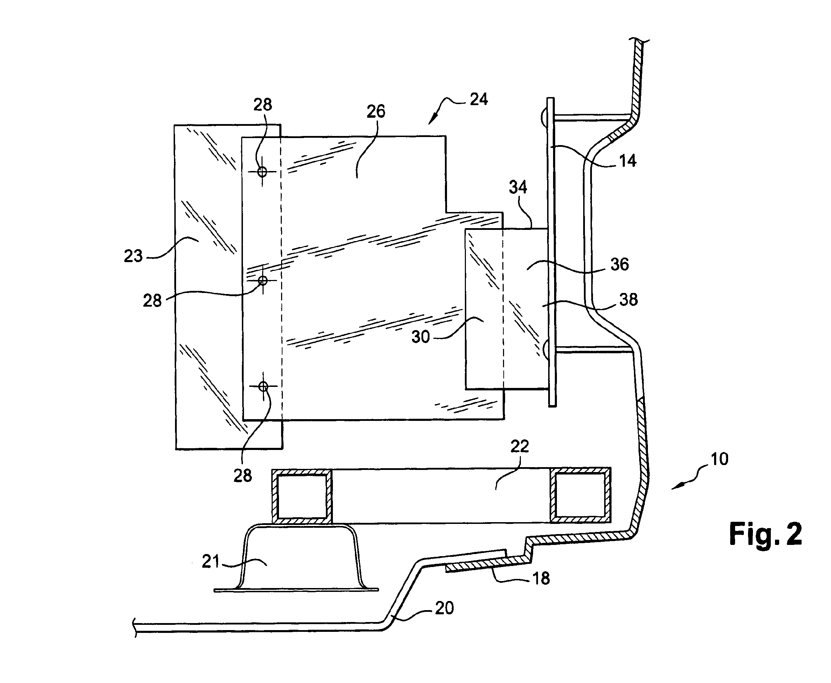

Le bouclier 10 est destiné à être monté sur une face avant technique du véhicule, dont seul un berceau inférieur 21 est représenté en figure 2. Cette face avant technique comporte notamment une poutre basse 22 et supporte un radiateur 23 sur lequel est fixé un voile 24 de déflecteur.

La poutre basse 22 occupe une partie inférieure du bouclier 10, située au-dessus du convergent inférieur 20. Cette poutre 22 est destinée à renforcer le bas du bouclier 10.

Le voile 24 de déflecteur est destiné à guider l'air entrant par la grille 16 vers les ailettes du radiateur. Il comprend une partie aval plate 26, située dans le prolongement du bord de la grille 16, qui achemine le flux d'air jusqu'au radiateur 23, et une partie amont courbe 29, qui s'écarte vers l'extérieur en direction du bouclier pour rejoindre la région de l'orifice 12. Le voile de déflecteur 24 est réalisé en polypropylène chargé.

La partie aval 26 du voile comporte, sur un bord 27 destiné à être solidaire du radiateur du véhicule, des moyens classiques 28 de fixation au radiateur, par exemple des orifices destinés à recevoir des vis ou des rivets, ou encore des languettes destinées à être soudées au radiateur.

La partie amont 29 comporte, du côté opposé au bord 27, une extrémité libre 30 qui est destinée à être insérée, lors du montage du bouclier 10 sur la face avant technique, dans une partie 32 du support 14 de feux anti-brouillard préalablement fixé sur le bouclier 10. Cette partie 32, que l'on appellera dans la suite de la description « entonnoir », comporte deux parois 34 et 36, convergeant vers un fond 38 et délimitant un logement pour recevoir l'extrémité libre 30.

Grâce à ces deux parois 34, 36, donnant à l'entonnoir 32 une embouchure élargie, l'insertion de l'extrémité libre 30 du voile 24 dans l'entonnoir 32 est facilitée, et donc en même temps la fixation du bouclier 10 sur la face avant technique.

En effet, lors de l'insertion, l'extrémité 30 du voile dispose dans un premier temps d'un espace relativement large entre les deux parois 34 et 36, et elle est ensuite guidée par ces même parois vers un espace plus étroit dont la largeur est limitée par la largeur du fond 38.

Une fois que le bouclier 10 est fixé sur la face avant technique, l'extrémité libre 30 du voile 24 est maintenue, grâce aux parois 34 et 36, dans l'entonnoir 32, et enfoncée à l'intérieur de cet entonnoir, éventuellement jusqu'au fond 38.

Dans cette position, il subsiste cependant un jeu entre l'extrémité libre 30 du voile et les deux parois 34, 36. Grâce à ce jeu, l'extrémité 30 est libre dans la direction transversale du véhicule, tout en étant cependant limitée par les deux parois 34, 36.

Selon un autre mode de réalisation non représenté, le véhicule ne comporte pas un support mais un obturateur de feux anti-brouillard destiné à boucher l'orifice 12 prévu pour le support. Dans ce cas, l'obturateur comporte, de la même façon que le support 14, un entonnoir similaire à l'entonnoir 32, destiné à maintenir l'extrémité libre 30 du voile 24.

Selon un autre mode de réalisation non représenté, l'entonnoir 32 est fixé sur la grille 16 d'entrée d'air ou venu de matière avec celle-ci, ce qui suppose néanmoins que la grille est réalisée séparément du bouclier.

De manière générale, l'entonnoir 32 peut être solidaire de toute pièce rapportée sur le bouclier 10. Sous réserve de respecter une géométrie permettant son démoulage, l'entonnoir 32 peut également venir directement de matière avec le bouclier.

Grâce à l'invention, le voile du déflecteur est maintenu sur le bouclier 10 malgré la présence de la poutre basse 22, et sans pour autant nécessiter de moyens de fixation demandant des pièces rapportées ou de la main d'oeuvre lors du montage du bouclier 10 sur la face avant technique.

Parmi les avantages de l'invention, on notera également que la mobilité de l'extrémité 30 du voile dans l'entonnoir 32 permet de pallier les dilatations thermiques, notamment au cours du roulement du véhicule, qui sont pourtant notables sur un matériau thermoplastique de faible épaisseur tel que le voile 24.

On notera enfin que l'invention n'est pas limitée aux modes de réalisation précédemment décrits.

## Revendications

1. Déflecteur pour avant de véhicule automobile comportant un voile (24) destiné à être solidarisé à un radiateur (23), ce voile (24) comportant une extrémité libre (30) distante du radiateur (23), **caractérisé en ce qu'**il comporte un moyen (32) de maintien de l'extrémité libre (30) du voile (24), destiné à être solidarisé à une pièce de carrosserie (14) de l'avant du véhicule automobile.

2. Déflecteur selon la revendication 1, dans lequel le moyen de maintien (32) est un moyen de recentrage du voile (24).

3. Déflecteur selon la revendication 1 ou 2, dans lequel le moyen de maintien comporte deux parois (34, 36) délimitant un logement pour l'extrémité libre (30) du voile (24).

4. Déflecteur selon la revendication 3, dans lequel le logement (32) comporte une embouchure élargie facilitant l'introduction de l'extrémité libre (30).

5. Déflecteur selon les revendications 3 ou 4, dans lequel il subsiste un jeu prédéterminé entre l'extrémité libre (30) du voile (24) et les deux parois (34, 36) lorsque l'extrémité libre (30) est maintenue par le moyen de maintien (32).

6. Déflecteur selon l'une quelconque des revendications 1 à 5, dans lequel le voile (24) comporte une extrémité (27) fixée au radiateur (23), opposée à l'extrémité libre (30).

7. Déflecteur selon l'une quelconque des revendications 1 à 6, destiné à être utilisé dans un véhicule automobile comportant une poutre basse (22).

8. Déflecteur selon l'une quelconque des revendications 1 à 7, dans lequel le voile (24) est réalisé en matière plastique, notamment en polypropylène chargé.

9. Moyen de maintien d'un déflecteur selon l'une quelconque des revendications 1 à 8, **caractérisé en ce qu'**il comprend une partie (32) formant un support (14) de feux anti-brouillard, un obturateur d'emplacement de feux anti-brouillard ou une grille d'entrée d'air.

10. Moyen de maintien selon la revendications 9, destiné à être rapporté sur une peau (10) de pare-chocs du véhicule automobile.

11. Bloc-avant de véhicule automobile, comportant un déflecteur selon l'une quelconque des revendications 1 à 10.

## Claims

1. A deflector for the front of a motor vehicle, the deflector comprising a screen (24) for securing to a radiator (23), the screen (24) having a free end (30) remote from the radiator (23), the deflector being **characterized in that** it includes holder means (32) for holding the free end (30) of the screen (24) and designed to be secured to a front bodywork part (14) of the motor vehicle.

2. A deflector according to claim 1, in which the holder means (32) are means for recentering the screen (24).

3. A deflector according to claim 1 or claim 2, in which the holder means comprise two walls (34, 36) defining a housing for the free end (30) of the screen (24).

4. A deflector according to claim 3, in which the housing (32) includes an enlarged opening, facilitating insertion of the free end (30).

5. A deflector according to claim 3 or claim 4, in which predetermined clearance remains between the free end (30) of the screen (24) and the two walls (34, 36) when the free end (30) is held by the holder means (32).

6. A deflector according to any one of claims 1 to 5, in which the screen (24) has one end (27) fastened to the radiator (23), said end being opposite from the free end (30).

7. A deflector according to any one of claims 1 to 6, designed for use in a motor vehicle that includes a low beam (22).

8. A deflector according to any one of claims 1 to 7, in which the screen (24) is made of plastics material, in particular of filled polypropylene.

9. Holder means for holding a deflector according to any one of claims 1 to 8, the holder means being **characterized in that** they comprise a portion (32) forming a foglight support (14), a member for closing a foglight location, or an air inlet grille.

10. Holder means according to claim 9, for fitting to a bumper skin (10) of the motor vehicle.

11. A motor vehicle front block including a deflector according to any one of claims 1 to 10.

## Patentansprüche

1. Spoiler für ein Vorderteil eines Kraftfahrzeugs, umfassend ein Segel (24), dazu bestimmt mit einem Kühler (23) verbunden zu werden, wobei dieses Segel (24) ein freies Ende (30) entfernt vom Kühler (23) umfasst, **dadurch gekennzeichnet, dass** es ein Mittel (32) zum Halten des freien Endes (30) des Segels (24) umfasst, dazu bestimmt mit einem Karosserieteil (14) des Vorderteils des Kraftfahrzeugs verbunden zu werden.

2. Spoiler nach Anspruch 1, wobei das Mittel zum Halten (32) ein Mittel zum Zentrieren des Segels (24) ist.

3. Spoiler nach Anspruch 1 oder 2, wobei das Mittel zum Halten zwei Wände (34, 36) umfasst, die eine Aufnahme für das freie Ende (30) des Segels (24) abgrenzen.

4. Spoiler nach Anspruch 3, wobei die Aufnahme (32) ein aufgeweitetes Mundstück umfasst, welches das Einführen des freien Endes (30) erleichtert.

5. Spoiler nach Anspruch 3 oder 4, wobei ein definiertes Spiel zwischen dem freien Ende (30) des Segels (24) und den beiden Wänden (34, 36) besteht, wenn das freie Ende (30) durch das Mittel zum Halten (32) gehalten wird.

6. Spoiler nach einem der Ansprüche 1 bis 5, wobei das Segel (24) ein am Kühler (23) befestigtes Ende (27) gegenüber dem freien Ende (30) umfasst.

7. Spoiler nach einem der Ansprüche 1 bis 6, dazu bestimmt in einem Kraftfahrzeug verwendet zu werden, dass einen unteren Träger (22) umfasst.

8. Spoiler nach einem der Ansprüche 1 bis 7, wobei das Segel (24) aus Kunststoffmaterial, insbesondere aus verstärktem Polypropylen gefertigt ist.

9. Mittel zum Halten eines Spoilers nach einem der Ansprüche 1 bis 8, **dadurch gekennzeichnet, dass** es ein Teil (32) umfasst, das einen Träger (14) für Nebelscheinwerfer, eine Abdeckung für die Aufnahme für Nebelscheinwerfer oder ein Lufteintrittsgitter bildet.

10. Mittel zum Halten nach Anspruch 9, dazu bestimmt auf einer Haut (10) eines Stoßfängers des Kraftfahrzeugs angebracht zu werden.

11. Frontpartie eines Kraftfahrzeugs, umfassend einen Spoiler nach einem der Ansprüche 1 bis 10.
